# EUROPEAN PATENT APPLICATION

(11) **EP 4 800 388 A1**
(43) Date of publication of application: **02.09.2026**
(21) Application number: 26160915.0
(22) Date of filing: 26.02.2026
(51) Int. Cl.: G01N 29/04, G01N 29/06, G01N 29/22, G01N 29/24, G01N 29/26, G01N 29/265, G01N 29/28, G01N 29/32

(54) **SYSTEMS AND METHODS FOR ULTRASONIC INSPECTION OF COMPLEX GEOMETRIES**

(30) Priority: 28.02.2025 US 202563764977 P
(71) Applicant: General Electric Company, Cincinnati, Ohio 45215 (US)
(72) Inventor: TRIVEDI, Deepak, Niskayuna, 12309-1027 (US); SINGH, Uday, Niskayuna, 12309-1027 (US); KOYITHITTA MEETHAL, Manoj Kumar, 560066 Bengaluru (IN); BOGGS, Emily Marie, Niskayuna, 12309-1027 (US); KUO, Pei-Hsin, Niskayuna, 12309-1027 (US)
(74) Representative: Openshaw & Co.

(57) **Abstract**

A sensor probe (110) may include at least one ultrasound transducer (320) and a controller (350). The controller (350) may be configured to: receive, via the at least one ultrasound transducer (320), ultrasound signals (112, 114) from a component surface (125) of a component (120); detect a pattern indicative of a communication from an other sensor probe (110), associated with the component (120), based on the received ultrasound signals (112, 114); decode the received ultrasound signals (112, 114) to retrieve a message from the other sensor probe (110), in response to detecting the pattern indicative of the communication from the other sensor probe (110); obtain, via the at least one ultrasound transducer (320), ultrasound data indicative of ultrasound waves (112, 114) in the component (120), in response to the retrieved message; and cause data analysis for detecting defects in the component (120) to be performed based on the obtained ultrasound data.

## Description

### CROSS-REFERENCE TO RELATED APPLICATIONS

This application claims the benefit of priority of U.S. Provisional Application No. 63/764,977 filed February 28, 2025, which is herein incorporated by reference in its entirety.

### TECHNICAL FIELD

These teachings relate generally to systems and methods for inspecting components and, more particularly, to ultrasound inspection devices and methods of operating such devices.

### BACKGROUND

Machine components may include defects or anomalies. A defect or anomaly may be generated in a machine component during manufacture or may appear after the machine component has been in use and has experienced an event that causes damage or stress to the machine component. Therefore, machine components in various industries may be subjected to periodic inspection to identify any defects or anomalies. An inspection may be used to assess component condition or quality, determine whether the component is fit for continued service, and/or generate a maintenance, repair, or replacement schedule for the component. Inspecting machine components for defects or anomalies may present various difficulties.

### BRIEF DESCRIPTION OF DRAWINGS

Various needs are at least partially met through the provision of the ultrasonic inspection devices and methods described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a diagram of an environment that includes an inspection system according to an implementation described herein;
FIG. 2 is a diagram illustrating various defects that may be detected by an inspection system according to an implementation described herein;
FIG. 3 is a diagram of a sensor probe according to an implementation described herein;
FIG. 4 is a diagram of example components of a sensor probe according to an implementation described herein;
FIG. 5 is a diagram of a computer device that may be included in a sensor probe or in an inspection system according to an implementation described herein;
FIG. 6 is a diagram of example components of a controller according to an implementation described herein;
FIG. 7 is a flowchart for a process of inspecting a component according to an implementation described herein;
FIG. 8 is a flowchart for a process of ultrasound communication according to an implementation described herein;
FIG. 9 is a flowchart for a process of synchronizing sensor probes according to an implementation described herein;
FIG. 10 is a flowchart for a process of inspecting a component according to an implementation described herein;
FIG. 11 is a diagram of a scattered ultrasound transducer inspection system according to an implementation described herein; and
FIG. 12 is a flowchart for a process of inspecting a component with a scattered ultrasound transducer inspection system according to an implementation described herein.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required. For example, while a series of blocks are described with respect to particular figures, the order of the blocks may be modified in other implementations. Further, non-dependent blocks may be performed in parallel.

### DETAILED DESCRIPTION

A component, such as, for example, a machine component, may be inspected using ultrasound. Ultrasonic testing may be performed using a single ultrasound transducer placed into a component via an inspection port. When the component is a component of a gas turbine engine, a single ultrasound transducer can be inserted into the engine via a borescope inspection (BSI) port. A single transducer may not be effective in inspecting a component with complex geometry, such as, for example, edges, ribs, flanges, and/or curves. A complex geometry may create shadow zones or other types of areas that absorb, scatter, and/or obstruct ultrasonic waves. Such interference with ultrasonic waves may result in inadequate coverage; undetected flaws, defects, or anomalies; and/or poor acoustic coupling or signal integrity. Furthermore, delivery of multiple transducers through a single inspection port may not be feasible, resulting in synchronization problems. Moreover, electromagnetic communication between different probes to synchronize ultrasound signal transmission may also not be feasible inside metallic components to be inspected. Additionally, the use of linear array of ultrasound transducers to perform a full matrix capture may not be possible on curved surfaces, such as on a wing of an aircraft. These are all significant challenges in the context of aviation application settings.

The various aspects of the present disclosure can be employed with systems and methods for ultrasonic inspection of complex geometries using untethered, conformal, and/or self-positioning sensor probes. A sensor probe may include sensor elements with ultrasound transducers with a conformal surface and reversible adhesion to the surface. The sensor probe may include, for example, a body formed at least in part from a flexible material that provides acoustic coupling between the ultrasound transducers and the surface of a component to be inspected, and that establishes a conformal surface between the transducers and the component surface. The sensor probe may further include mechanical coupling elements between the sensor elements to enable the movement between adjacent sensor elements to maintain conformal contact with the component surface, locomotion actuators to move the sensor probe along the component surface, and/or contact actuators configured to contact the component surface, adjust contact pressure between the component surface and the sensor probe, and/or distribute pressure evenly across the contact area between the contact actuator and the component surface.

The sensor probe may be untethered, meaning that no wires need to connect the sensor probe to a power source or to a controlling device. For example, the sensor probe may include a power source disposed in a body of the sensor probe (e.g., enclosed within a volume comprising the flexible material); a controller configured to control the ultrasound transducers, locomotion actuators, and/or contact actuators; and/or a transceiver such as a radio frequency (RF) wireless communication device to communicate with other computer devices to receive inspection instructions and/or report inspection data.

The sensor probe may be self-positioning. For example, the sensor probe may move, using the locomotion actuators, along the component surface to a better position to improve the inspection process. The sensor probe may obtain ultrasound data based on received ultrasound signals from the component at a first location, determine a target location on the component surface based on the received ultrasound data, use the locomotion actuator to move the sensor probe along the component surface to the target location, obtain target location ultrasound data based on received ultrasound signals, and perform data analysis or cause data analysis to be performed for detecting defects in the component based on the target location ultrasound data. The sensor probe may determine the target location based on a Signal-to-noise (SNR) gradient between two locations, based on detecting a shadow zone in the component at the first location, based on identifying a defect in the component and selecting to move closer to the defect, and/or based on another criterion.

Furthermore, multiple untethered, conformal, and/or self-positioning sensor probes may be deployed on a component to perform an inspection and to communicate with each other before and/or during the inspection. In some implementations, the sensor probes may communicate with each other using RF communication (e.g., when component surfaces do not interfere with RF signals, etc.), optical communication, non-ultrasound acoustic communication, and/or another type of communication technology. In other implementations, the sensor probes may communicate with each other using ultrasound. Thus, the sensor probes may employ dual use of acoustics for performing an inspection and for communicating with each other. For example, a sensor probe may receive ultrasound signals via a component surface, detect a pattern indicative of a communication from another sensor probe based on the received ultrasound signals, decode the received ultrasound signals based on the retrieved message in response to detecting the pattern, and perform an action based on the retrieved message.

The action may include, for example, moving to a different location on the component surface, changing an angle of incidence of ultrasound signals transmitted by the sensor probe, selecting transmitter and receiver roles for two probes, receiving a synchronization signal from the other sensor probe and synchronizing ultrasound signal transmission or reception between the two probes based on the received synchronization signal, synchronizing ultrasound transmission and reception between the two probes to control multiple sensor probes to function as part of ultrasound phased array transceiver, synchronizing ultrasound transmission and reception between the two probes as part of a full matrix capture inspection of the component, and/or other types of actions.

Moreover, when communicating with each other using ultrasound, probes may perform message collision avoidance to prevent messages from interfering with each other. Furthermore, a sensor probe may perform error detection and correction when communicating with the other sensor probe using ultrasound signals. Additionally, the sensor probes may select whether to communicate using ultrasound waves traveling through the component or ultrasound waves traveling along the surface of the component. For example, ultrasound waves at a first frequency may travel through the component and ultrasound waves at a second frequency may travel along surfaces of the components. Two sensor probes may select whether to communicate using ultrasound waves traveling through the component or ultrasound waves traveling along the surface of the component based on their locations.

Multiple untethered, conformal, and/or self-positioning sensor probes may be deployed on a component and optimize their positions on the component surface to perform a full matrix capture inspection. A set of sensor probes may be deployed on a component surface and perform a baseline surface mapping of the component at initial first locations to obtain first ultrasound data for the component. The sensor probes may then perturb their positions to second locations and obtain second ultrasound data for the component at the second locations. The sensor probes may use the first and second ultrasound data to determine a signal quality metric gradient between the first and second location for each sensor probe. Each sensor probe may then determine for itself a target location based on the signal quality metric gradient, move in a direction towards the target location that increases the signal quality metric, and obtain ultrasound data at the target location. The probes may repeat a process of determining new target locations based on computed signal quality metric gradients, moving to the new target locations, and obtaining, at the new target locations, new ultrasound data until a determination that signal quality metric convergence has occurred, to arrive at final locations for an inspection. Signal quality metric convergence may be determined by, for example, determining that the signal quality metric has improved by less than a signal quality metric improvement threshold. The sensor probes may then use ultrasound communication to synchronize ultrasound transmission and reception between different pairs of sensor nodes to perform a full matrix capture inspection of the component. A full matrix capture may include transmitting ultrasound signals into the component by a first sensor node at a first location and receiving ultrasound signals by a second sensor node at a second location for each possible pair of sensor nodes in the deployed set of sensor nodes. The full matrix capture data may then be used to characterize the component, including performing data analysis for detecting defects in the component based on the full matrix capture data.

Though the sensor probes described herein refer to ultrasonic inspection and ultrasonic transducers, it is to be understood that the systems, methods, and devices described herein can use any acoustic waves, for example, at other frequences and are not limited to ultrasonic frequencies.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise. Further, the phrase "based on" is intended to mean "based, at least in part, on" unless explicitly stated otherwise. No element, act, or instruction in the present application should be construed as critical or essential to the embodiments described herein unless explicitly described as such.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

It is additionally noted that the term "substantially" is also utilized herein to represent an inherent degree of uncertainty that may be attributed to any quantitative comparison, value, measurement, or other representation. The term "substantially" is also utilized herein to represent the degree by which a quantitative representation may vary from a stated reference without resulting in a change in the basic function of the subject matter at issue.

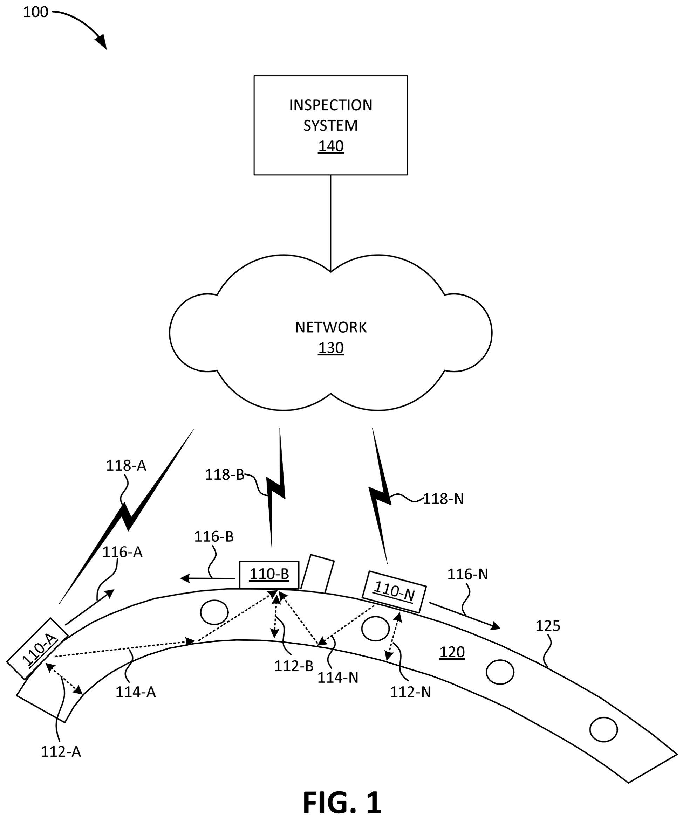

Referring now to the drawings, FIG. 1 is a diagram of an environment 100. As shown in FIG. 1, the environment 100 includes sensor probes 110-A to 110-N (referred to collectively as "sensor probes 110" and individually as "sensor probe 110"), a component 120, a network 130, and an inspection system 140. For illustrative purposes, three sensor probes 110-A, 110-B, and 110-N are shown. In practice, a different number of sensor probes 110 may be deployed.

The sensor probes 110 can be deployed on a component surface 125 of the component 120 to inspect the component 120 using ultrasound. While three sensor probes 110-A, 110-B, and 110-N are shown for illustrative purposes in FIG. 1, in practice, the environment 100 may include fewer or more sensor probes 110 (e.g., an N number of sensor probes 110, etc.). The component 120 may include a machine component with complex geometry, such as a machine component with curved surfaces; curved edges; flanges, struts, ribs, or other types of projections or interconnections; tubing, piping, and/or other types of conduits; areas of high acoustic impedance; and/or other types of features that may make ultrasound inspection challenging. For example, the component 120 may include part of a gas turbine engine or another type of engine, part of an aircraft fuselage, part of an aircraft wing, and/or other types of aviation components. In some examples, the component 120 is in a confined space or difficult to reach location within a larger machine or assembly.

The sensor probe 110 may include one or more ultrasound transducers to transmit the ultrasound waves 112 into and/or induce ultrasound waves inside of the component 120 via the component surface 125. For example, the sensor probe 110-A may transmit ultrasound waves 112-A into the component 120 and receive reflected ultrasound waves, the sensor probe 110-B may transmit ultrasound waves 112-B into the component 120 and receive reflected ultrasound waves, the sensor probe 110-N may transmit ultrasound waves 112-N into component 120 and receive reflected ultrasound waves, etc. The transducers can also transmit ultrasound waves 112 across the component surface 125. Furthermore, a first sensor probe 110 may transmit ultrasound waves through the component 120 and/or across the component surface 125 that are received by a second sensor probe 110. For example, the sensor probe 110-A may transmit ultrasound waves 114-A that are received by the sensor probe 110-B, the sensor probe 110-N may transmit ultrasound waves 114-N that are received by the sensor probe 110-B, etc. The sensor probe 110 may travel along the component surface 125 using one or more locomotion actuators. For example, the sensor probe 110 may travel along direction 116-A, the sensor probe 110-B may travel in direction 116-B, the sensor probe 110-N may travel in direction 116-N, etc. The sensor probes 110 may communicate with each other using ultrasound, or another acoustic frequency, and may self-position on the component surface 125 to optimize an inspection of the component 120. Furthermore, the sensor probes 110 may communicate with each other using ultrasound waves 114 to synchronize transmission and reception of inspection ultrasound signals, to assign transmitter and receiver roles, function as part of an ultrasound phased array, perform a full matrix capture, and/or perform other actions based on communicating with each other. The sensor probes 110 can transmit acoustic waves using pulse echo techniques and/or can emit continuous waves with modulation (e.g., frequency or wave modulation) for communication with each other. In a pulse echo mode, one or more of the sensor probes 110 can send pulses of acoustic waves into the component 120 and analyze the echoes that bounce back or are received from interfaces in the component 120. In a continuous wave mode, one or more of the sensor probes 110 can transmit a continuous acoustic wave into the component 120 and modulate the wave with a frequency change, amplitude change, etc.

The sensor probes 110 may communicate with the inspection system 140 over the network 130 using wireless signals 118. For example, the sensor probe 110-A may communicate with the inspection system 140 using a wireless signal 118-A, the sensor probe 110-B may communicate with the inspection system 140 using a wireless signal 118-B, the sensor probe 110-N may communicate with the inspection system 140 using a wireless signal 118-N, etc. In other implementations, the sensor probes 110 may be connected to the inspection system 140 using wired connections before and/or after an inspection. The network 130 may include a local area network (LAN), a wireless LAN (e.g., a WIFI network, etc.), a wide area network (WAN), a metropolitan area network (MAN), a cellular wireless network, an optical network, the Internet, a satellite network, an ad hoc network, an intranet, or any combination of such networks. The inspection system 140 may include one or more computer devices, such as, for example, a server, a desktop computer, a laptop computer, a handheld wireless communication device (e.g., smartphone, a tablet computer, etc.), and/or another type of computer device. The inspection system 140 can provide inspection instructions to the sensor probes 110 prior and/or during an inspection. Furthermore, the inspection system 140 can receive inspection data from the sensor probes 110 during and/or after an inspection and may perform data analysis and/or cause data analysis to be performed for detecting defects in the component based on the received inspection data.

In other implementations, the environment 100 may include fewer components, different components, differently arranged components, or additional components than what is depicted in FIG. 1. Additionally, or alternatively, one or more of the components of the environment 100 may perform functions described as being performed by one or more other components of the environment 100. The component 120 may have a complex geometry, for example, with edges, ribs, flanges, and/or non-planar (e.g., curved) surfaces. As described herein, the sensor probes 110 may have conformal surfaces that couple effectively to complex geometries. Further, the sensor probes 110 are able to communicate with each other and/or with the inspection system 140 to optimize the angle of incidence for Ultrasonic Testing (UT) readings, reducing shadow zones, and/and maximizing signal-to-noise ratio (SNR) for UT readings.

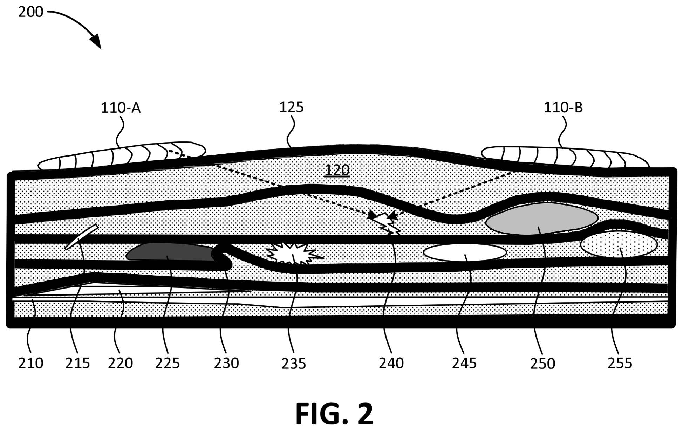

FIG. 2 is a diagram 200 illustrating various defects that can be detected in the component 120. As shown in FIG. 2, defects that may be present in the component 120 and detected by the sensor probes 110 include but are not limited to a debonding defect 210, a broken fiber defect 215, a delamination defect 220, a resin rich area defect 225, a wrinkle defect 230, a foreign object defect 235, a matrix crack defect 240, a void defect 245, a blister defect 250, and a porosity defect 255. The debonding defect 210 may occur when bonding between adjacent layers in the component 120 is compromised. The broken fiber defect 215 may occur when a fiber in the component 120 breaks. The delamination defect 220 may occur when adjacent layers in the component 120 delaminate. The resin rich area defect 225 may occur when resin is not distributed evenly during manufacture of the component 120. The wrinkle defect 230 may occur when a fiber in the component 120 includes a wrinkle. The foreign object defect 235 may occur when a foreign object has been accidentally introduced into the component 120 during manufacture. The matrix crack defect 240 may occur when a crack forms in a matrix material (e.g., a composite material), for example, during manufacturing or loading of the component 120. The void defect 245 may occur when resin is not distributed evenly during manufacture of the component 120. The blister defect 250 may occur when a blister appears in the component 120. The porosity defect 255 may occur when an area of increased porosity occurs in the component 120.

Different types of defects may respond to ultrasound waves in different ways and may reflect, absorb, scatter, or otherwise alter ultrasound waves transmitted into, or induced in, the component 120. The sensor probes 110 may obtain ultrasound data based on reflected/echo ultrasound waves received via the component surface 125 and perform data analysis and/or cause data analysis to be performed to detect defects in the component 120. In some implementations, the data analysis can be performed by the sensor probes 110. In other implementations, some or all of the data analysis can be performed by the inspection system 140.

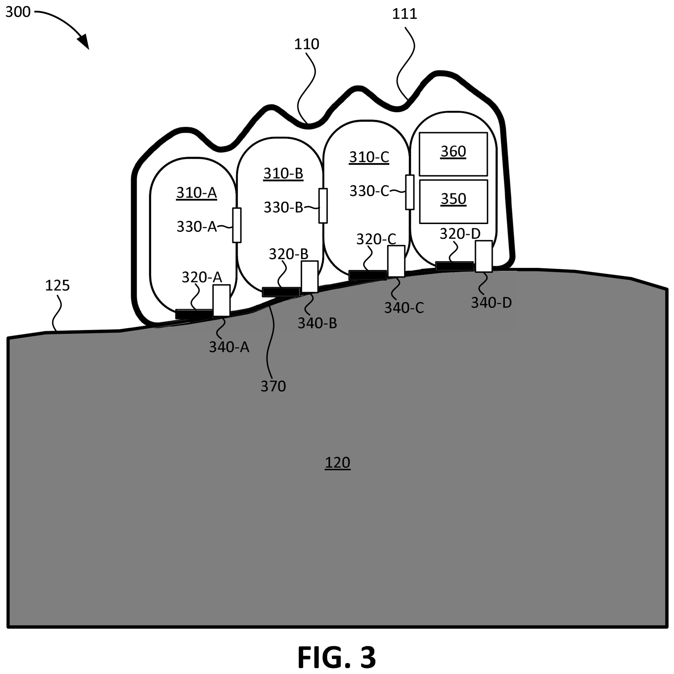

FIG. 3 is a diagram of an environment 300 that includes the sensor probe 110 on the component surface 125. The sensor probe 110 comprises a body that is formed at least in part from a flexible material 370. As shown in FIG. 3, the sensor probe 110 includes one or more sensor elements 310-A, 310-B, 310-C (referred to collectively as "sensor elements 310" and individually as "sensor element 310"), one or more ultrasound transducers 320-A, 320-B, 320-C, 320-D (referred to collectively as "ultrasound transducers 320" and individually as "ultrasound transducer 320"), one or more mechanical coupling elements 330-A, 330-B, 330-C (referred to collectively as "mechanical coupling elements 330" and individually as "mechanical coupling element 330"), one or more contact actuators 340-A, 340-B, 340-C, 340-D (referred to collectively as "contact actuators 340" and individually as "contact actuator 340"), a controller 350, a power supply 360, and a flexible material 370.

The sensor probe 110 is advantageous for the inspection of a complex geometry, such as the surface 125 of the component 120, because the flexible material 370 allows the probe to conform to the surface 125 which optimizes acoustic coupling and eliminates air gaps for UT inspection. Further, in some configurations, the probe 110 is untethered and equipped with a locomotion actuator, allowing the probe 110 to move and navigate complex geometries. Because the probe 110 includes the contact actuators 340, the probe 110 is also able to achieve uniform contact pressure with complex, non-planar surfaces. In some aspects, the contact actuators 340 can also ensure that each of the sensor elements 310-A, 310-B, 310-C are in contact with the component 120.

The sensor element 310 may house the ultrasound transducer 320 and provide structural support to the ultrasound transducer 320, the mechanical coupling element 330, and/or the contact actuator 340. Furthermore, one or more of the sensor elements 310 may house and provide structural support for the controller 350 and/or the power supply 360. The ultrasound transducer 320 can include a piezoelectric ultrasound transducer, an electromagnetic acoustic transducer (EMAT), a capacitive micromachined ultrasonic transducer (CMUT), a micro-electromechanical system (MEMS) transducer, and/or another type of ultrasound transducer device. The ultrasound transducer 320, along with transceiver circuitry associated with the ultrasound transducer 320, may convert electrical signals to ultrasound signals at a particular ultrasound frequency or range of frequencies, may receive reflected ultrasound signals (e.g., ultrasound echoes, etc.) from the component 120 and/or receive ultrasound signals induced in the component 120, and may convert the received ultrasound signals into electrical signals. For example, the ultrasound transducer 320 may generate ultrasound signals having a frequency of between about 0.5 Megahertz (MHz) to about 20 MHz, between about 1 MHz to about 10 MHz, between about 2 MHZ to about 6 MHz, and, in some aspects, having a frequency of about 5 MHz.

Furthermore, in some implementations, the ultrasound transducer 320 can include multiple ultrasound transducers configured to operate as an ultrasonic phased array, such as, for example, a one-dimensional (1D) ultrasound transducer phased array, a two-dimensional (2D) ultrasound phased transducer array, etc. Additionally, or alternatively, the ultrasound transducers 320 may be configured to function together as an ultrasound linear phased array. An ultrasound transducer array may be controlled electronically to tilt an ultrasound beam in a particular direction and/or to create a focused acoustic wave with a particular focal depth. The focal depth may refer to a distance below component surface 125 at which the acoustic wave has a maximum amplitude.

The mechanical coupling element 330 may mechanically couple and connect sensor element 310 to an adjacent sensor element 310. It is contemplated that the flexible material 370 can act as the mechanical coupling element 330 in some configurations. For example, the sensor elements 310 may be coupled to or embedded in the flexible material 370. In this manner, the flexible material 370 can bend and flex to allow the sensor elements 310 to move relative to each other. In some aspects, the mechanical coupling element 330 is configured to enable movement between the sensor element 310 and an adjacent sensor element 310 with respect to each other and/or with respect to the component surface 125. Thus, the mechanical coupling element 330 may enable the sensor elements 310 to move in a substantially vertical direction with respect to the component surface 125 in order to enable ultrasound transducers 320 of adjacent sensor elements 310 to maintain contact with the component surface 125.

In some implementations, the mechanical coupling element 330 includes a passive connection, such as a slip joint, sliding mechanism, flexible tubing, and/or another type of passive coupling. Additionally, or alternatively, the mechanical coupling element 330 may include a controllable connection and may further function as and/or include a locomotion actuator operable to move the sensor probe 110 along the component surface 125. The locomotion actuator may be controllable to expand and contract in a relatively horizontal and/or vertical direction with respect to the component surface 125 to enable expansion and contraction of the sensor probe 110 along the horizontal and/or vertical direction to enable the sensor probe 110 to travel along the component surface 125. The locomotion actuator may include a mechanical locomotion actuator, an electrical locomotion actuator, a hydraulic locomotion actuator, a pneumatic locomotion actuator, and/or another type of locomotion actuator.

The contact actuator 340 is configured to contact the component surface 125 and to adjust contact pressure between the component surface 125 and the sensor probe 110. The contact actuator 340 can include a suction cup array, a vacuum pump, an electroadhesion device, and/or another type of contact actuator. In some implementations, such as a suction cup array, the contact actuator 340 extends through the flexible material 370 to contact the component surface 125 directly. In other implementations, such as an electroadhesion device, the contact actuator 340 functions by exerting a contact pressure force through flexible material 370.

Furthermore, the contact actuator 340 may distribute contact pressure substantially evenly across a contact area between the contact actuator 340 and the component surface 125. For example, the contact actuator 340 may include a contact pressure distribution mechanism, such as, for example, microfluid channels, a pneumatic array of bladders, multiplexed dielectric elastomer actuators, electroactive polymers, and/or another type of contact pressure distribution mechanism. The contact actuator 340 can include one or more pressure sensors to sense the contact pressure of the contact actuator 340 with the component surface 125, and control circuitry to measure contact pressure and distribute contact pressure substantially evenly across the contact area using the contact pressure distribution mechanism. In some implementations, the contact actuators 340 function as locomotion actuators and/or work together with locomotion actuators associated with the mechanical coupling elements 330 to the move sensor probe 110 along the component surface 125.

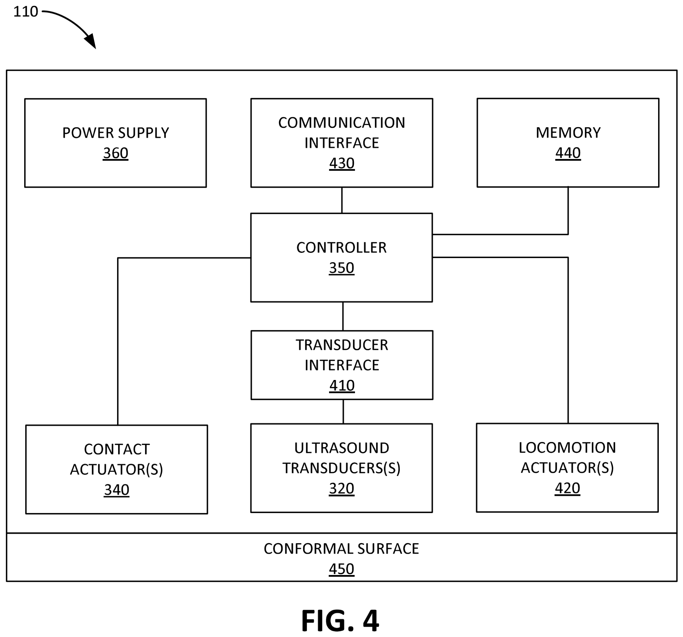

The controller 350 controls the operation of the sensor probe 110 by controlling the ultrasound transducers 320, the mechanical coupling elements 330, and/or the contact actuators 340 as explained in further detail below with reference to FIG. 4. The power supply 360 may provide power to the ultrasound transducers 320, the mechanical coupling elements 330, the contact actuators 340, and/or the controller 350. The power supply 360 can include one or more batteries. Thus, in some configurations, the sensor probe 110 is untethered and requires no wired connections to a source of power and/or to an outside controller in order to perform an inspection of the component 120.

The flexible material 370 can establish and function as a conformal surface of the sensor probe 110 with respect to the component surface 125. Thus, the sensor probe 110 may be conformally positioned on the component surface 125 of the component 120. Conformal positioning of the sensor probe 110 on the component surface 125 refers to a measurement surface of the sensor probe 110 maintaining contact with the component surface 125 to a sufficient degree to enable the ultrasound transducers 320 to be sufficiently acoustically coupled to the component surface 125, to maintain a sufficient impedance match with the component surface 125, and/or to enable the ultrasound transducers 320 to perform ultrasound inspection of the component 120 via the component surface 125.

In some implementations, the entire body of the sensor probe 110 is formed from the flexible material 370. In other implementations, a portion of the body of the sensor probe 110 (e.g., not an entirety of the sensor probe 110) is formed from the flexible material 370 and another portion of the body is formed from, for example, a non-flexible material. The portion of the sensor probe 110 comprising the flexible material 370 may be sufficient to provide a conformal surface between the sensor probe 110 and the component surface 125. For example, the bottom surface of the body of the sensor probe 110 may be formed from the flexible material 370 and the upper portion of the body may be formed from a non-flexible material. In another example, one or more sections along the length of the body are formed from the flexible material 170. The flexible material 370 may flex to conform around the shape of the probe 110 and/or may stretch to accommodate movement of the mechanical coupling elements 330 as the sensor probe 110 moves along the component surface 125. Furthermore, the flexible material 370 may compress as the contact actuators 340 apply contact pressure against the component surface 125.

The flexible material 370 may include a silicone (e.g., polysiloxane, etc.) material and/or another type of organosilicon material and, in some aspects, is a gel material. In other implementations, a different type of conformal surface may be used by sensor probe 110. For example, the sensor probe 110 may extrude an acoustically conductive gel from a gel reservoir to create a conformal surface between the ultrasound transducers 320 and the component surface 125, and a suction device to withdraw the acoustically conductive gel back into the gel reservoir before the sensor probe 110 initiates travel to another location on the component surface 125.

FIG. 4 is a diagram of example components of the sensor probe 110. As shown in FIG. 4, the sensor probe 110 includes the transducers 320, the contact actuators 340, the controller 350, the power supply 360, a transducer interface 410, locomotion actuators 420, a communication interface 430, a memory 440, and a conformal surface 450.

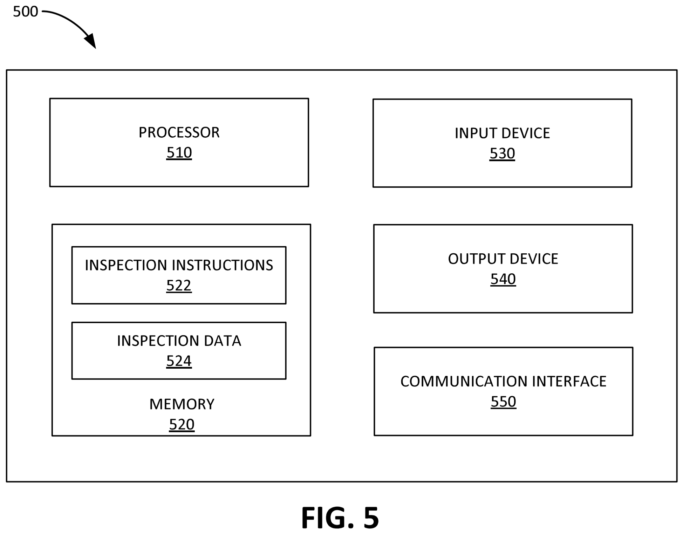

The controller 350 may be electrically coupled to and control ultrasound transducers 320 via a transducer interface 410. The transducer interface 410 may include an analog-to-digital converter (ADC) to convert analog signals from the ultrasound transducer 320 to digital signals to obtain ultrasound data from the ultrasound transducer 320 and/or a digital-to-analog converter (DAC) to convert digital signals from the controller 350 to analog signals to control transmission of ultrasound signals by the ultrasound transducer 320. Furthermore, the controller 350 can be coupled to and control the contact actuators 340 and/or locomotion actuators 420. As explained above, the locomotion actuators 420 can be implemented in mechanical coupling elements 330 and/or in contact actuators 340. The power supply 360 can supply power to all other components of the sensor probe 110 shown in FIG. 4. In some implementations, the sensor probe 110 includes the communication interface 430 and the memory 440 in addition to a memory and/or communication interface included in the controller 350 (as described below with reference to FIG. 5). For example, the communication interface 430 can include an RF transceiver for communicating with other sensor probes 110 and/or inspection system 140. The conformal surface 450 may be implemented by the flexible material 370 as described above.

In other implementations, the sensor probe 110 can include fewer components, different components, differently arranged components, and/or additional components than depicted in Figs. 3 or 4. Additionally, or alternatively, one or more of the components of the sensor probe 110 can perform functions described as being performed by one or more of the other components of the sensor probe 110. For example, while the sensor probe 110 is shown in FIG. 3 with four sensor elements 310, four ultrasound transducers 320, three mechanical coupling elements 330, and four contact actuators 340 for illustrative purposes, in practice the sensor probe 110 may include fewer, or additional sensor elements 310, ultrasound transducers 320, mechanical coupling elements 330, and/or contact actuators 340. Furthermore, the sensor probe 110 may include additional controllers 350 and/or power supplies 360. Moreover, in other implementations, the sensor probe 110 can be used for testing the component 120 using a different type of sensor. For example, some or all ultrasound transducers 320 may be replaced with eddy current sensors.

FIG. 5 is a diagram of a computer device 500. The sensor probe 110 and/or the inspection system 140 can each include one or more computer devices 500. As shown in FIG. 5, the computer device 500 may include a processor 510, a memory 520, an input device 530, an output device 540, and a communication interface 550. In some implementations, the components of the computer device 500 may be electrically connected to each other via a bus that enables communication between the components. In other implementations, the components of the computer device 500 may be connected to each other directly and/or a first component may be included within a second component.

The processor 510 may include any type of single-core processor, multi-core processor, microprocessor, latch-based processor, central processing unit (CPU), graphics processing unit (GPU), tensor processing unit (TPU), quantum processing unit (QPU), hardware accelerator, and/or processing logic (or families of processors, microprocessors, and/or processing logic) that interprets and executes instructions. In other implementations, the processor 510 may include an application-specific integrated circuit (ASIC), a field-programmable gate array (FPGA), and/or another type of integrated circuit or processing logic.

The memory 520 may include any type of dynamic storage device that stores information and/or instructions for execution by the processor 510, and/or any type of nonvolatile storage device that stores information for use by the processor 510. For example, the memory 520 can include a random access memory (RAM) or another type of dynamic storage device, a read-only memory (ROM) device or another type of static storage device, a content addressable memory (CAM), a magnetic and/or optical recording memory device and its corresponding drive (e.g., a hard disk drive, optical drive, etc.), and/or a removable form of memory, such as a flash memory. The memory 520 may include inspection instructions 522 and inspection data 524. The inspection instructions 522 can be used to control operation of the sensor probes 110 for inspecting the component 120. The memory 520 can store data to be used during the inspection and/or data obtained during the inspection.

The input device 530 may allow an operator to input information into the computer device 500. The input device 530 can include, for example, a keyboard, a mouse, a pen, a microphone, a remote control, an audio capture device, an image and/or video capture device, a touch-screen display, and/or another type of input device. In some implementations, the computer device 500 may be managed remotely and may not include the input device 530. In other words, the computer device 500 may be "headless" and may not include an input device 530 directly operable by an operator of the computer device 500.

The output device 540 may output information to an operator of the computer device 500. The output device 540 can include a display, a printer, a speaker, and/or another type of output device. For example, the output device 540 may include a liquid-crystal display (LCD), a Light Emitting Diode (LED) display, and/or another type of display. In some implementations, the computer device 500 may be managed remotely and may not include the output device 540. In other words, the computer device 500 may be "headless" and may not include an output device 540 directly operable by an operator of the computer device 500.

The communication interface 550 may include a transceiver that enables the computer device 500 to communicate with other devices and/or systems via wireless communications (e.g., radio frequency, infrared, and/or visual optics, etc.), wired communications (e.g., conductive wire, twisted pair cable, coaxial cable, transmission line, fiber optic cable, and/or waveguide, etc.), or a combination of wireless and wired communications. The communication interface 550 may include a transmitter that converts baseband signals to RF signals and/or a receiver that converts RF signals to baseband signals. The communication interface 550 may be coupled to an antenna for transmitting and receiving RF signals.

The communication interface 550 may include a logical component that includes input and/or output ports and/or other input and output components that facilitate the transmission of data to other devices. For example, the communication interface 550 may include a network interface card (e.g., Ethernet card) for wired communications and/or a wireless network interface (e.g., a WIFI) card for wireless communications. The communication interface 550 may also include a universal serial bus (USB) port for communications over a cable, a Bluetooth^{™} wireless interface, a radio-frequency identification (RFID) interface, a near-field communications (NFC) wireless interface, and/or any other type of interface.

As described herein, the computer device 500 may perform particular operations relating to ultrasonic inspection of a component. The computer device 500 may perform these operations in response to the processor 510 executing software instructions contained in a computer-readable medium, such as the memory 520. A computer-readable medium may be defined as a non-transitory memory device. A non-transitory memory device may be implemented within a single physical memory device or spread across multiple physical memory devices. The software instructions may be read into the memory 520 from another computer-readable medium or from another device. The software instructions contained in the memory 520 may cause the processor 510 to perform processes described herein. Alternatively, hardwired circuitry may be used in place of, or in combination with, software instructions to implement processes described herein. Thus, implementations described herein are not limited to any specific combination of hardware circuitry and software.

In other implementations, the computer device 500 may include fewer components, different components, differently arranged components, or additional components than depicted in FIG. 5. Additionally, or alternatively, one or more of the components of the computer device 500 may perform functions described as being performed by one or more of the other components of the computer device 500.

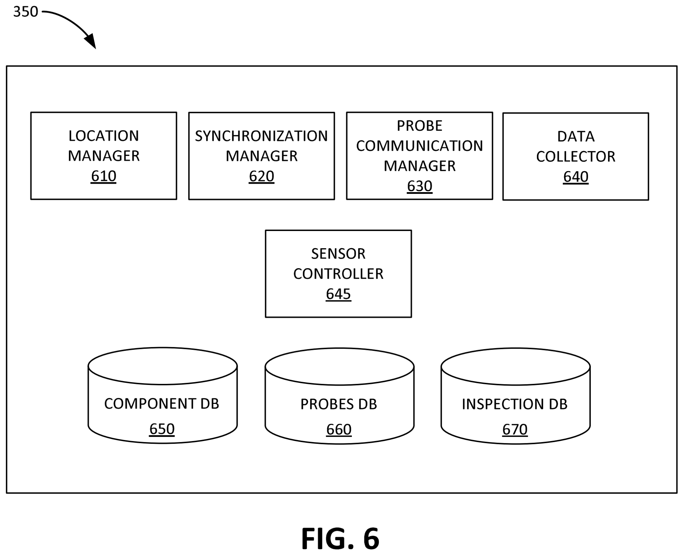

FIG. 6 is a diagram of example components of the controller 350. The components of the controller 350 shown in FIG. 6 may be implemented, for example, via the processor 510 executing instructions from memory 520. Alternatively, some or all of the components of controller 350 may be implemented via hard-wired circuitry. For example, components of controller 350 may correspond to an ASIC, FPGA, and/or another type of integrated circuit. As shown in FIG. 6, controller 350 can include one or more of a location manager 610, a synchronization manager 620, a probe communication manager 630, a data collector 640, a sensor controller 645, a component database (DB) 650, a probes DB 660, and an inspection DB 670.

The location manager 610 may manage the location of the sensor probe 110 on the component surface 125 and/or may control operation of locomotion actuators associated with the mechanical coupling elements 330 and/or contact actuators 340 (see FIG. 3). For example, the location manager 610 may move the sensor probe 110 to a particular location on the component surface 125. The location manager 610 may select a target location on the component surface 125 to move sensor probe 110 to and may control locomotion actuators associated with the mechanical coupling elements 330 and/or the contact actuators 340 to move the sensor probe 110 to the target location. The location manager 610 can use information in the component DB 650 to move the sensor probe 110 to the target location. The location manager 610 may keep track of a current location of the sensor probe 110 on component surface 125 based on an initially identified location and dead reckoning, based on a multilateration process using ultrasound signals received from other the sensor probes 110 in connection with location associated with the other sensor probes 110, based on previously mapped SNR values (or values of other signal quality metrics) at different points on the component surface 125 correlated with measured SNR values, and/or based on any alternate and/or additional technique.

Furthermore, the location manager 610 may perform self-positioning of the sensor probe 110. For example, the location manager 610 can move the sensor probe 110 along the component surface 125 to a better position to improve the inspection process. The location manager 610 may obtain ultrasound data based on received ultrasound signals from the component 120 at a first location, determine a target location on the component surface 125 based on the received ultrasound data, use the locomotion actuators to move the sensor probe 110 along the component surface 125 to the target location. The location manager 610 may determine the target location based on a signal quality metric gradient (e.g., an SNR gradient) between two locations, based on a detected shadow zone in the component 120 at a first location, based on identifying a defect in the component 120 and selecting to move closer to the defect, and/or based on another criterion.

The synchronization manager 620 may manage synchronization of communication between sensor probes 110 to avoid message collisions and may manage synchronization of transmission and reception of ultrasound signals to characterize the component 120. For example, the synchronization manager 620 may schedule transmission or reception of ultrasound signals during particular time slots assigned for communication, transmission, or reception of ultrasound signals during an inspection process. Moreover, the synchronization manager 620 may synchronize transmission or reception of ultrasound signals of the sensor probe 110 to control the sensor probe 110 to function as part of an ultrasound phase array of multiple sensor probes 110.

The probe communication manager 630 may manage communication between sensor probes 110 using information stored in the probes DB 660. For example, probe communication manager 630 may detect a pattern indicative of a communication from another sensor probe 110 in received ultrasound signals, decode the received ultrasound signals to retrieve the message from the other sensor probe 110, identify a message type and the sensor probe 110 that sent the message, and perform an action based on the identified message type and the sensor probe 110. The action may include responding to a transmission or reception role request with a role assignment, accepting a transmission or reception role assignment, synchronizing transmission or reception based on a received synchronization signal, sending requested data to a requesting the sensor probe 110, storing data received from the other sensor probe 110, receiving ultrasound data characterizing the component 120 based on an ultrasound transmission sent by the other sensor probe 110, and/or another type of action.

The data collector 640 may manage collection of inspection data. For example, the data collector 640 can use the sensor controller 645 to receive ultrasound data obtained by the ultrasound transducers 320 during an inspection of the component 120 and store the received ultrasound data in the inspection DB 670.

The sensor controller 645 may control the operation of the ultrasound transducers 320. For example, the sensor controller 645 may excite one or more ultrasound transducers 320 to generate ultrasound waves at a particular frequency or frequency range, for a particular duration, as a particular pattern of pulses, at a particular amplitude, and/or may otherwise control the transmission or generation of ultrasound signals by ultrasound transducers 320. Furthermore, the sensor controller 645 may control the ultrasound transducers 320 to receive ultrasound signals via component surface 125. Additionally, the sensor controller 645 may coordinate transmission and reception between multiple ultrasound transducers 320, such as, for example, controlling multiple ultrasound transducers 320 to function as an ultrasound phased array. The sensor controller 645 may receive instructions from, and/or provide ultrasound data to, location manager 610, synchronization manager 620, probe communication manager 630, and/or data collector 640.

The component DB 650 may store information relating to component 120. For example, the component DB 650 can store a map of the surfaces of the component 120. Furthermore, the component DB 650 can store information identifying detect shadow zones, information indicating identified signal quality metric values (e.g., SNR values) measured at particular locations on the component 120, information identifying detected defects in the component 120, and/or other types of information associated with the component 120.

The probes DB 660 can store information relating to the sensor probes 110. For example, the probes DB 660 can store an identifier for each sensor probe 110, a current location of each sensor probe 110 on the component surface 125, a currently assigned transmitter or receiver role for each sensor probe 110, synchronization information for each sensor probe 110 (e.g., a time interval during which the sensor probe 110 is to transmit), a status (e.g., health, error state, etc.) associated with each sensor probe 110, and/or other types of information relating to the sensor probes 110. Furthermore, the probes DB 660 can store information relating to ultrasound communication between sensor probes 110, such as message type identifiers for different types of messages, collision avoidance information, error detection and correction information, and/or other types of information relating to ultrasound communication between the sensor probes 110.

The inspection DB 670 may store ultrasound data relating to an inspection of the component 120, such as ultrasound data received by the sensor probe 110 at particular locations on the component surface 125, full matrix capture ultrasound data for the component 120, detected and/or identified defects of the component 120 based on ultrasound data, and/or other type of inspection data.

In other implementations, the controller 350 may include fewer components, different components, differently arranged components, or additional components than depicted in FIG. 6. Additionally, or alternatively, one or more of the components of the controller 350 may perform functions described as being performed by one or more of the other components of the controller 350. Furthermore, in some implementations, at least some of the functionality of the controller 350 described with respect to FIG. 6 may be performed by inspection system 140.

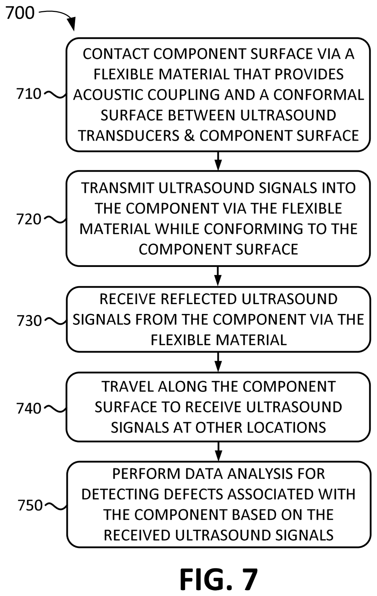

FIG. 7 is a flowchart for a process 700 of inspecting a component. In some implementations, process 700 may be performed by one or more of the sensor probes 110. In other implementations, some or all of process 700 may be performed by another device or groups of devices separate from the sensor probes 110, such as, for example, the inspection system 140. The process 700 or portions thereof can be performed or implemented using the controller 350 (FIGS. 4 and 6), the inspection system 140 (FIG. 1), or combinations thereof. For example, the controller 350 and/or the inspection system 140 may be configured to perform the process 700 or portions thereof.

The process 700 may include contacting a component surface via a flexible material that provides acoustic coupling and a conformal surface between ultrasound transducers and the component surface (block 710). For example, the sensor probe 110 may be placed on the component surface 125 and the controller 350 may control locomotion actuators associated with the mechanical coupling elements 330 and/or the contact actuators 340 to conform a measurement surface of the ultrasound transducers 320 with the component surface 125 via the flexible material 370.

The process 700 may further include transmitting ultrasound signals into the component via the flexible material while conforming to the component surface (block 720) and receiving reflected ultrasound signals from the component via the flexible material (block 730). For example, the sensor probe 110 can use ultrasound transducers 320 to transmit ultrasound signals into the component 120 (or to induce ultrasound signals in the component 120) and to obtain ultrasound data indicative of reflected or induced ultrasound waves in the component 120. The sensor probe 110 can obtain ultrasound data based on ultrasound waves generated by itself or by another sensor probe 110.

The process 700 may further include traveling along the component surface to receive ultrasound signals at other locations (block 740). For example, the sensor probe 110 may use one or more locomotion actuators 420 to travel along the component surface 125 to other locations in order to obtain ultrasound data at the other locations. Process 700 may further include performing data analysis for detecting defects associated with the component based on the received ultrasound signals (block 750). The sensor probe 110 may use the obtained ultrasound data for data analysis to identify defects in the component 120 and/or may provide the obtained ultrasound data to the inspection system 140 for analysis.

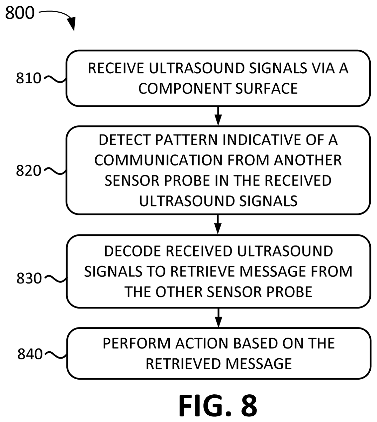

FIG. 8 is a flowchart for a process 800 of ultrasound communication. In some implementations, the process 800 is performed by one or more sensor probes 110. In other implementations, some or all of process 800 is performed by another device or groups of devices separate from the sensor probes 110, such as, for example, the inspection system 140. The process 800 or portions thereof can be performed or implemented using the controller 350 (FIGS. 4 and 6), the inspection system 140 (FIG. 1), or combinations thereof. For example, the controller 350 and/or the inspection system 140 may be configured to perform the process 800 or portions thereof.

The process 800 includes receiving ultrasound signals from a component surface (block 810). For example, the sensor probe 110 may receive a set of ultrasound pulses via the component surface 125. The process 800 may further include detecting a pattern indicative of a communication from another sensor probe in the received ultrasound signals (block 820) and decoding the received ultrasound signals to retrieve the message from the other sensor probe (block 830). For example, the sensor probe 110 can identify the set of ultrasound pulses as an ultrasound communication from another sensor probe 110 and record a subsequent set of pulses as message data. The message data may include header information and a message payload. The header information may include information identifying a message type, information identifying a sending sensor probe 110, information identifying an intended recipient sensor probe 110 or identifying the message as a broadcast to all sensor probes 110, a timestamp, a payload length, and/or other types of header information.

The message type may include, for example, a role request that requests whether the sensor probe 110 is to act as a transmitter or a receiver, a role assignment that assigns the receiving sensor probe 110 to act as the transmitter or as the receiver, a synchronization signal to synchronize ultrasound transmission and reception between the sending sensor probe 110 and the receiving sensor probe 110, a synchronization acknowledgement signal, a request for data from the receiving sensor probe 110, a response to a request for data from the receiving sensor probe 110, a request to change an angle of incidence of ultrasound signals transmitted by the receiving sensor probe 110, a status report message indicating a status associated with the sending sensor probe 110,a ping announcement indicating the sending sensor probe 110 will generate ultrasound waves in the component during a particular time period, and/or another type of ultrasound communication message.

The process 800 may further include performing an action based on the retrieved message (block 840). For example, the sensor probe 110 may perform an action based on the retrieved message, such as, for example, responding to a transmission or reception role request with a role assignment, accepting a transmission or reception role assignment, synchronizing transmission or reception based on a received synchronization signal, changing an angle of incidence of ultrasound signals transmitted by the sensor probe 110, sending requested data to a requesting sensor probe 110, storing data received from the other sensor probe 110, receiving ultrasound data characterizing the component 120 based on an ultrasound transmission sent by the other sensor probe 110, and/or another type of action.

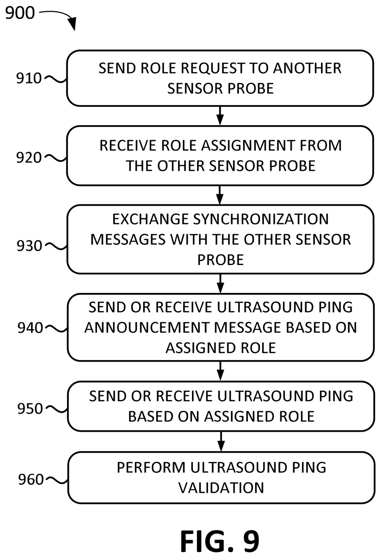

FIG. 9 is a flowchart for a third process 900 of synchronizing sensor probes. In some implementations, the process 900 may be performed by one or more of the sensor probes 110. In other implementations, some or all of the process 900 may be performed by another device or groups of devices separate from the sensor probes 110, such as, for example, the inspection system 140. The process 900 or portions thereof can be performed or implemented using the controller 350 (FIGS. 4 and 6), the inspection system 140 (FIG. 1), or combinations thereof. For example, the controller 350 and/or the inspection system 140 may be configured to perform the process 900 or portions thereof.

The process 900 may include sending a role request to another sensor probe (block 910) and receiving a role assignment from the other sensor probe (block 920). For example, the sensor probe 110 may send a role request message to another sensor probe 110 using ultrasound communication and may receive a role assignment from the other sensor probe 110 indicating whether the sensor probe 110 is to act as a transmitter or receiver of ultrasound signals to characterize the component 120.

The process 900 may further include exchanging synchronization messages with the other sensor probe (block 930). After receiving the role assignment, the sensor probe 110 and the other sensor probe 110 may exchange a synchronization signal to establish the timing of the ultrasound signals to characterize the component 120. The process 900 may further include sending or receiving an ultrasound ping announcement message based on the assigned role (block 940), sending or receiving an ultrasound ping based on the assigned role (block 950), and performing ultrasound ping validation (block 960). The transmitting sensor probe 110 may then send a signal announcing an ultrasound ping and may follow the ping announcement by the ultrasound ping. The ultrasound ping may be sent through the component 120 from the transmitting sensor probe 110 to the receiving sensor probe 110. The receiving sensor probe 110 may obtain ultrasound data based on the ultrasound ping and may store the ultrasound data for subsequent data analysis to detect and/or identify defects in the component 120. The ultrasound ping may be followed by an ultrasound ping validation in which the receiving sensor probe 110 sends an acknowledgment message to the transmitting sensor probe 110 that the ultrasound ping has been received.

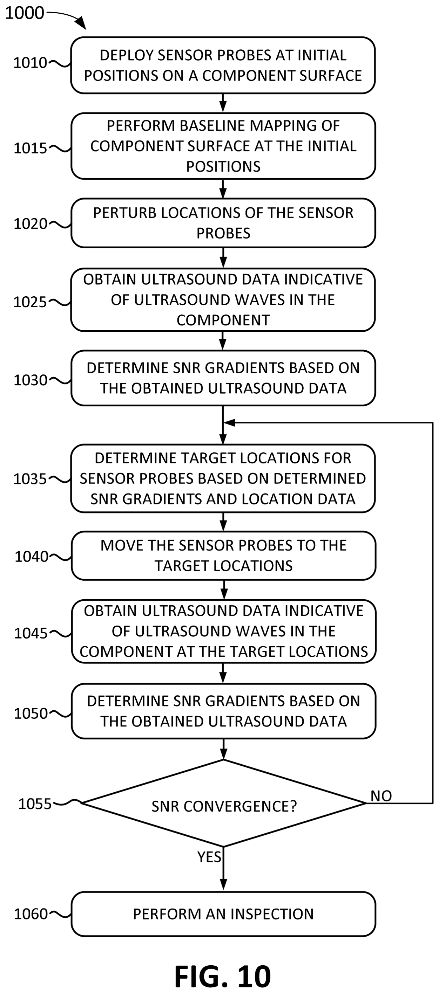

FIG. 10 is a flowchart for a process 1000 of inspecting a component. In some implementations, the process 1000 may be performed by one or more of the sensor probes 110. In other implementations, some or all of the process 1000 is performed by another device or groups of devices separate from the sensor probes 110, such as, for example, the inspection system 140. The process 1000 or portions thereof can be performed or implemented using the controller 350 (FIGS. 4 and 6), the inspection system 140 (FIG. 1), or combinations thereof. For example, the controller 350 and/or the inspection system 140 may be configured to perform the process 1000 or portions thereof.

The process 1000 may include deploying ultrasound probes at initial positions (block 1010) and performing a baseline mapping of component surface at initial positions (block 1015). For example, the sensor probes 110 may be placed on the component surface 125 distributed evenly across the component surface 125 or placed at selected locations. As another example, the sensor probes 110 may be programmed with a map of the component 120, each sensor probe 110 may be assigned an initial position on the map, and sensor probes 110 may be introduced into the component 120 through an inspection port and travel to their respective initial positions. Once at the initial positions, each sensor probe 110 may perform an ultrasound transmission and reception to obtain ultrasound data of the component 120 at the initial positions. The obtained ultrasound data may be used to create or update a map of the component 120. Furthermore, sensor probes 110 may be programmed with an inspection plan that specifies a set of locations on component 120 from which measurements are to be performed, a type of data capture to perform, one or more parameters for ultrasound waves to be used during the inspection, and/or other types of information to be used in carrying out the inspection of component 120.

The process 1000 may further include perturbing the locations of the sensor probes (block 1020), obtaining ultrasound data indicative of ultrasound waves in the component at the perturbed locations (block 1025), and determining SNR gradients based on the obtained ultrasound data (block 1030). For example, each sensor probe 110 can move a particular distance in a random direction, or in a predetermined direction based on the initial position, to a new location. Each sensor probe 110 can then perform another ultrasound transmission and reception to obtain ultrasound data at the new position. Each sensor probe 110 may then determine an SNR gradient from the initial position to the new position by determining a first SNR value for the ultrasound data at the initial position and a second SNR value for the ultrasound data at the new position, to determine an initial SNR gradient.

The process 1000 may further include determining target locations for the sensor probes based on the determined SNR gradients and location data (block 1035), moving the sensor probes to the target locations (block 1040), obtaining ultrasound data indicative of ultrasound waves in the component at the target locations (block 1045), and determining SNR gradients based on the obtained ultrasound data (block 1050). For example, each sensor probe 110 may determine a target location and/or direction of movement in a direction of increasing SNR. When determining the target location, the sensor probe 110 may consider a set of specified locations on component 120 at which ultrasound data is to be collected. For example, a specified location may indicate an area on the component surface 125 and the sensor probe 110 may move within the area to find the target location. As another example, the sensor probe 110 may determine a direction in which to move to improve SNR and may adjust the direction to move closer to a location at which ultrasound data is to be collected. As yet another example, the sensor probe 110 may determine that a location at which ultrasound data is to be collected is associated with an SNR that is less than a minimum SNR threshold, and may coordinate with another sensor probe 110 to obtain ultrasound data at the location in an attempt to increase the SNR of the received ultrasound signals at the location.

If the determined SNR gradient was zero, the sensor probe 110 may return to the initial position and perturb in a different direction, or perturb in a random direction from the current location, in an another attempt to determine a direction with an increasing SNR. The sensor probes 110 can move to their determined target locations and perform another ultrasound transmission and reception to obtain ultrasound data at the target locations. The sensor probes 110 may then each compute a new SNR gradient between the previous location and the current location.

A determination can be made as to whether there is SNR convergence (block 1055). For example, the sensor probe 110 may determine whether a determined SNR gradient varies by less than an SNR improvement threshold. If it is determined that SNR convergence has not occurred (block 1055 - NO), processing may return to block 1035 to determine new target locations for the sensor probes 110. Sensor probes 110 may not all reach SNR convergence at the same time. For example, a first sensor probe 110 may determine that the SNR gradient determined by the first sensor probe 110 is less than an SNR improvement threshold and the first sensor probe 110 may assume its final position for the inspection A second sensor probe 110 may continue to move to new target locations one or more times until the second sensor probe 110 also determines that the SNR gradient determined by the second sensor probe 110 is not improving by more than an SNR improvement threshold. The processing of blocks 1035, 1040, 1045, and 1050 may continue until all sensor probes 110 reach their final positions.

If it is determined that SNR convergence has occurred (block 1055 - YES), an inspection may be performed (block 1060). For example, the sensor probes 110 may perform a full matrix capture to generate ultrasound inspection data. To perform a full matrix capture, each possible combination of transmitting sensor probe 110 and receiving sensor probe 110 may be selected and used to obtain ultrasound data. Thus, for N sensor probes 110, N!/(N-2)! ultrasound data capture events may be generated to perform the full matrix capture. The full matrix capture data may then be used for data analysis to detect and/or identify defects in the component 120.

Although the process 1000 is described as using SNR gradients it is contemplated that any other suitable signal quality metric can be used. Other suitable signal quality metrics include but are not limited to signal to interference ratio, signal to distortion ratio, peak signal to noise ratio, mean squared error, modulation error ratio, etc.

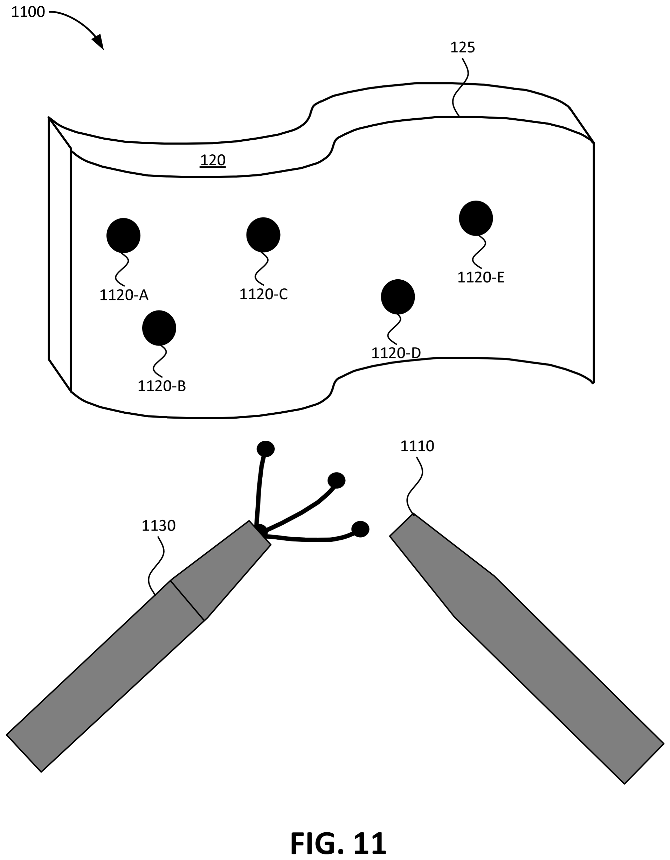

FIG. 11 is a diagram of a scattered ultrasound transducer inspection system 1100. In the implementation of FIG. 11, multiple ultrasound sensors are printed at locations on component surface 125 in order to inspect component 120. As shown in FIG. 11, the inspection system 1100 may include an ultrasound transducer printing tool 1110, the component 120 with printed ultrasound transducers 1120 (referred collectively as "printed ultrasound transducers 1120" and individually as "printed ultrasound transducer 1120"), and an ultrasound transducer probe tool 1130.

The ultrasound transducer printing tool 1110 may include a handheld portable three-dimensional (3D) printer configured to print an ultrasound transducer onto the component surface 125. For example, the ultrasound transducer printing tool 1110 may print printed ultrasound transducers 1120-A, 1120-B, 1120-C, 1120-D, and 1120-E on the component surface 125. While FIG. 11 shows five printed ultrasound transducers 1120 for illustrative purposes, in practice a different number of printed ultrasound transducers 1120 may be printed onto the component surface 125.

The ultrasound transducer printing tool 1110 may include a cartridge loaded with ultrasound sensors that may be dispensed and attached to the component surface 125. Each ultrasound sensor in the cartridge may include piezoelectric material, an adhesive acoustically coupling material, and sensor leads for controlling ultrasound transmission and reception by the piezoelectric material. The ultrasound transducer printing tool 1110 may dispense an ultrasound sensor from the cartridge and attach the ultrasound sensor to the component surface 125 via the adhesive acoustically coupling material at a predetermined location to generate the printed ultrasound transducers 1120.

In other implementations, the ultrasound transducer printing tool 1110 may 3D print the adhesive acoustically coupling material, the piezoelectric material, and the sensor leads from source material cartridges included in the ultrasound transducer printing tool 1110. For example, the ultrasound transducer printing tool 1110 may 3D print the ultrasound transducer 1120 using a polymer-based piezoelectric material. The polymer-based piezoelectric material may include polyvinylidene fluoride (PVDF), a copolymer of PVDF, polyacrylonitrile (PAN), a copolymer of PAN, and/or another type of polymer piezoelectric material. The ultrasound transducer printing tool 1110 may include multiple source materials, such as source filaments, to print the ultrasound transducer 1120 onto component surface 125. The source materials may include, for example, a source material to print an adhesive acoustically coupling layer (e.g., based on a silicone material, etc.), a source material to print the polymer-based piezoelectric material, and/or a source material to print a conducting polymer (e.g., polyacetylene, polypyrrole, polyaniline, etc.) to connect to the leads of the ultrasound transducer probe tool 1130.

The ultrasound transducer probe tool 1130 may include a power source and circuitry for controlling printed ultrasound transducers 1120. The ultrasound transducer probe tool 1130 may cause the printed ultrasound transducer 1120 to transmit ultrasound waves into the component 120, to receive reflected ultrasound waves from the component 120 in response, and to generate and store ultrasound data based on the reflected ultrasound waves. The ultrasound transducer probe tool 1130 may cause a first printed ultrasound transducer 1120 to transmit ultrasound waves into the component 120 using a first set of leads and cause a second printed ultrasound transducer 1120 to receive reflected ultrasound waves from the component 120 using a second set of leads.

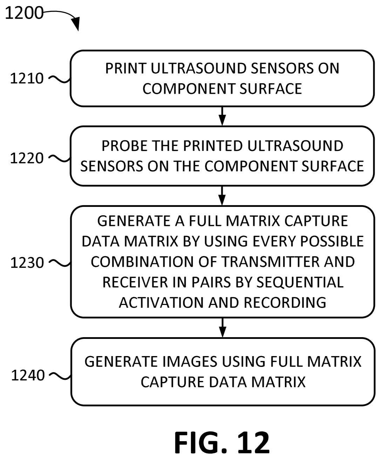

FIG. 12 is a flowchart for a process 1200 of inspecting a component with a scattered ultrasound transducer inspection system. In some implementations, the process 1200 is performed by the scattered ultrasound transducer inspection system 1100. In other implementations, some or all of the process 1200 may be performed by another device or groups of devices separate from the scattered ultrasound transducer inspection system 1100.

The process 1200 may include printing ultrasound sensors on a component surface (block 1210). For example, the ultrasound transducer probe tool 1130 may print the printed ultrasound transducers 1120 onto the component surface 125 at particular locations based on the surface geometry of the component 120. The process 1200 may further include probing the printed ultrasound sensors on the component surface (block 1220) and generating a full matrix capture data matrix by using every possible combination of transmitter and receiver in pairs by sequential activation and recording (block 1230). For example, the ultrasound transducer probe tool 1130 may connect control leads to a first printed ultrasound transducer 1120 and to a second printed ultrasound transducer 1120 and cause the first printed ultrasound transducer 1120 to transmit ultrasound signals and cause the second printed ultrasound transducer 1120 to receive ultrasound signals based on the transmitted ultrasound signals. The ultrasound transducer probe tool 1130 may repeat this process for each possible combination of transmitter and receiver for each pair of printed ultrasound transducers 1120 to generate a full matrix capture data matrix of component 120.

The process 1200 may further include generating images using the full matrix capture data matrix (block 1240). For example, the full matrix capture data matrix may be downloaded from the ultrasound transducer probe tool 1130 to the inspection system 140 to generate ultrasound images of the component 120 based on the full matrix capture data matrix and/or to perform data analysis (or cause data analysis to be performed) on the images to identify defects in the component 120.

Further aspects of the disclosure are provided by the subject matter of the following clauses:

A sensor probe comprising: at least one ultrasound transducer; and a controller configured to: receive, via the at least one ultrasound transducer, ultrasound signals from a component surface of a component; detect a pattern indicative of a communication from an other sensor probe, associated with the component, based on the received ultrasound signals; decode the received ultrasound signals to retrieve a message from the other sensor probe, in response to detecting the pattern indicative of the communication from the other sensor probe; obtain, via the at least one ultrasound transducer, ultrasound data indicative of ultrasound waves in the component, in response to the retrieved message; and cause data analysis for detecting defects in the component to be performed based on the obtained ultrasound data.

The sensor probe of any preceding clause, wherein, when decoding the received ultrasound signals to retrieve the message from the other sensor probe, the controller is further configured to: receive a synchronization signal from the other sensor probe associated with the component; and synchronize ultrasound signal transmission or reception or clocks between the at least one ultrasound transducer and an ultrasound transducer included in the other sensor probe based on the received synchronization signal.

The sensor probe of any preceding clause, wherein, when synchronizing the ultrasound signal transmission or reception between the at least one ultrasound transducer and the ultrasound transducer included in the other sensor probe based on the received synchronization signal, the controller is further configured to: select transmitter and receiver roles for the at least one ultrasound transducer and the ultrasound transducer included in the other sensor probe.

The sensor probe of any preceding clause, wherein, when synchronizing the ultrasound signal transmission or reception between the at least one ultrasound transducer and the ultrasound transducer included in the other sensor probe based on the received synchronization signal, the controller is further configured to: synchronize at least one of ultrasound transmission and reception or clocks between the at least one ultrasound transducer and the ultrasound transducer included in the other sensor probe to cause the at least one ultrasound transducer and the ultrasound transducer included in the other sensor probe to function as an ultrasound phased array transceiver.

The sensor probe of any preceding clause, wherein, when synchronizing the ultrasound signal transmission or reception between the at least one ultrasound transducer and the ultrasound transducer included in the other sensor probe based on the received synchronization signal, the controller is further configured to: synchronize at least one of ultrasound transmission and reception or clocks between the at least one ultrasound transducer and the ultrasound transducer included in the other sensor probe to perform a full matrix capture inspection of the component.

The sensor probe of any preceding clause, wherein the controller is configured to: change an angle of incidence of ultrasound signals transmitted by the at least one ultrasound transducer into the component based on the retrieved message.

The sensor probe of any preceding clause, further comprising: a locomotion actuator operable to move the sensor probe along the component surface; wherein the controller is further configured to control the locomotion actuator to move the sensor probe to another location based on the retrieved message.

The sensor probe of any preceding clause, wherein, when controlling the locomotion actuator to move the sensor probe to another location based on the retrieved message, the controller is configured to: receive ultrasound signals from the other sensor probe; determine a Signal-to-noise (SNR) gradient based on the received ultrasound signals; select a target location on the component surface based on the determined SNR gradient; and control the locomotion actuator to move the sensor probe to the selected target location.

The sensor probe of any preceding clause, wherein the controller is configured to communicate with the other sensor probe using ultrasound signals transmitted through the component or along the component surface.

The sensor probe of any preceding clause, wherein the controller is further configured to: perform message collision avoidance when communicating with the other sensor probe using ultrasound signals.

The sensor probe of any preceding clause, wherein the controller is further configured to: perform error detection and correction when communicating with the other sensor probe using ultrasound signals.

The sensor probe of any preceding clause, wherein the retrieved message includes information identifying a message type, information identifying a sending sensor probe, information identifying a receiving sensor probe, and a message payload.

The sensor probe of any preceding clause, wherein the retrieved message includes at least one of: a role request that requests whether the other sensor probe is to act as a transmitter or a receiver; a role assignment that assigns the sensor probe to act as the transmitter or as the receiver; a synchronization signal to synchronize at least one of ultrasound transmission and reception or clocks between the at least one ultrasound transducer and the ultrasound transducer included in the other sensor probe; a synchronization acknowledgement signal; a request for data from the sensor probe; a response to the request for data from the sensor probe; a status report message indicating a status associated with the other sensor probe; or a ping announcement indicating the other sensor probe will generate ultrasound waves in the component during a particular time period.

A system comprising: a plurality of sensor probes, wherein a sensor probe, of the plurality of sensor probes, includes: at least one ultrasound transducer; and a controller configured to: receive, via the at least one ultrasound transducer, ultrasound signals from a component surface of a component; detect a pattern indicative of a communication from an other sensor probe, of the plurality of sensor probes, based on the received ultrasound signals; decode the received ultrasound signals to retrieve a message from the other sensor probe, in response to detecting the pattern indicative of the communication from the other sensor probe; and control the sensor probe to move the sensor probe to another location based at least in part upon the retrieved message

The system of any preceding clause, wherein the controller is further configured to cause data analysis for detecting defects in the component to be performed based on the obtained ultrasound data.

The system of any preceding clause, wherein the controller is further configured to obtain, via the at least one ultrasound transducer, ultrasound data indicative of ultrasound waves in the component, in response to the retrieved message.

The system of any preceding clause, wherein the sensor probe, of the plurality of sensor probes further includes: a locomotion actuator operable to move the sensor probe along a component surface of a component; and whereinto control the sensor probe to move to another location, the controller is to activate the locomotion activator.

The system of any preceding clause, wherein controllers of the plurality of sensor probes are configured to: perform a baseline surface mapping of the component at first locations of the plurality of sensor probes to obtain first ultrasound data; perturb the first positions of the plurality of sensor probes to second locations; obtain, at the second locations, second ultrasound data indicative of ultrasound waves in the component; determine target locations based on the first ultrasound data and the second ultrasound data; move the plurality of sensor probes to the target locations; and obtain, at the target locations, target location ultrasound data indicative of ultrasound waves in the component.

The system of any preceding clause, wherein the controllers are configured to: determine the target locations based on a Signal-to-noise (SNR) gradient between the first locations and the second locations.

The system of any preceding clause, wherein the controllers are configured to: determine new target locations based on computed SNR gradients, move the plurality of sensor probes to the new target locations, and obtain, at the new target locations, new target location ultrasound data indicative of ultrasound waves in the component, until a determination that SNR convergence has occurred, to arrive at final locations for an inspection.

The system of any preceding clause, wherein the controllers are configured to: synchronize at least one of ultrasound transmission and reception or clocks between particular ones of the plurality of sensor probes at the final locations to perform a full matrix capture inspection of the component.

The system of any preceding clause, wherein, when decoding the received ultrasound signals to retrieve the message from the other sensor probe, the controller is further configured to: receive a synchronization signal from the other sensor probe associated with a component; and synchronize at least one of ultrasound signal transmission or reception or clocks between the at least one ultrasound transducer and an ultrasound transducer included in the other sensor probe based on the received synchronization signal.

The system of any preceding clause, wherein, when synchronizing the ultrasound signal transmission or reception between the at least one ultrasound transducer and the ultrasound transducer included in the other sensor probe based on the received synchronization signal, the controller is further configured to: select transmitter and receiver roles for the at least one ultrasound transducer and the ultrasound transducer included in the other sensor probe.

The system of any preceding clause, wherein, when synchronizing the ultrasound signal transmission or reception between the at least one ultrasound transducer and the ultrasound transducer included in the other sensor probe based on the received synchronization signal, the controller is further configured to: synchronize at least one of ultrasound transmission and reception or clocks between the at least one ultrasound transducer and the ultrasound transducer included in the other sensor probe to cause the at least one ultrasound transducer and the ultrasound transducer included in the other sensor probe to function as an ultrasound phased array transceiver.

A method, performed by a sensor probe, the method comprising: receiving, via an ultrasound transducer in the sensor probe, ultrasound signals from a component surface of a component; detecting a pattern indicative of a communication from an other sensor probe, associated with the component, based on the received ultrasound signals; decoding the received ultrasound signals to retrieve a message from the other sensor probe, in response to detecting the pattern indicative of the communication from the other sensor probe; obtaining, via the ultrasound transducer, ultrasound data indicative of ultrasound waves in the component, in response to the retrieved message; and performing data analysis for detecting defects in the component based on the obtained ultrasound data.

The method of any preceding clause, further comprising: performing a baseline surface mapping of the component at first locations of a plurality of sensor probes to obtain first ultrasound data; perturbing the first positions of the plurality of sensor probes to second locations; obtaining, at the second locations, second ultrasound data indicative of ultrasound waves in the component; determining target locations based on the first ultrasound data and the second ultrasound data and based on a Signal-to-noise (SNR) gradient between the first locations and the second locations; moving the plurality of sensor probes to the target locations; obtaining, at the target locations, target location ultrasound data indicative of ultrasound waves in the component; determining new target locations based on computed SNR gradients; moving the plurality of sensor probes to the new target locations; obtaining, at the new target locations, new target location ultrasound data indicative of ultrasound waves in the component, until a determination that SNR convergence has occurred, to arrive at final locations for an inspection; and synchronizing ultrasound transmission and reception between particular ones of the plurality of sensor probes at the final locations to perform a full matrix capture inspection of the component.

A sensor probe comprising: at least one ultrasound transducer; and a controller configured to: receive, via the at least one ultrasound transducer, ultrasound signals from a component surface of a component; detect a pattern indicative of a communication from an other sensor probe, associated with the component, based on the received ultrasound signals; decode the received ultrasound signals to retrieve a message from the other sensor probe, in response to detecting the pattern indicative of the communication from the other sensor probe; obtain, via the at least one ultrasound transducer, ultrasound data indicative of ultrasound waves in the component, in response to the retrieved message; and cause data analysis for detecting defects in the component to be performed based on the obtained ultrasound data.

The sensor probe of any preceding clause, wherein, when decoding the received ultrasound signals to retrieve the message from the other sensor probe, the controller is further configured to: receive a synchronization signal from the other sensor probe associated with the component; and
synchronize at least one of ultrasound signal transmission or reception or clocks between the at least one ultrasound transducer and an ultrasound transducer included in the other sensor probe based on the received synchronization signal.

The sensor probe of any preceding clause, wherein, when synchronizing the ultrasound signal transmission or reception between the at least one ultrasound transducer and the ultrasound transducer included in the other sensor probe based on the received synchronization signal, the controller is further configured to: select transmitter and receiver roles for the at least one ultrasound transducer and the ultrasound transducer included in the other sensor probe.

The sensor probe of any preceding clause, wherein, when synchronizing the ultrasound signal transmission or reception between the at least one ultrasound transducer and the ultrasound transducer included in the other sensor probe based on the received synchronization signal, the controller is further configured to: synchronize at least one of ultrasound transmission and reception or clocks between the at least one ultrasound transducer and the ultrasound transducer included in the other sensor probe to cause the at least one ultrasound transducer and the ultrasound transducer included in the other sensor probe to function as an ultrasound phased array transceiver.

The sensor probe of any preceding clause, wherein, when synchronizing the ultrasound signal transmission or reception between the at least one ultrasound transducer and the ultrasound transducer included in the other sensor probe based on the received synchronization signal, the controller is further configured to: synchronize at least one of ultrasound transmission and reception or clocks between the at least one ultrasound transducer and the ultrasound transducer included in the other sensor probe to perform a full matrix capture inspection of the component.

The sensor probe of any preceding clause, wherein the controller is configured to: change an angle of incidence of ultrasound signals transmitted by the at least one ultrasound transducer into the component based on the retrieved message.

The sensor probe of any preceding clause, further comprising: a locomotion actuator operable to move the sensor probe along the component surface; wherein the controller is further configured to control the locomotion actuator to move the sensor probe to another location based on the retrieved message.

The sensor probe of any preceding clause, wherein the controller is configured to communicate with the other sensor probe using ultrasound signals transmitted through the component or along the component surface.

The sensor probe of any preceding clause, wherein the controller is further configured to: perform message collision avoidance when communicating with the other sensor probe using ultrasound signals.

The sensor probe of any preceding clause, wherein the retrieved message includes information identifying a message type, information identifying a sending sensor probe, information identifying a receiving sensor probe, and a message payload.

The sensor probe of any preceding clause, wherein the retrieved message includes at least one of: a role request that requests whether the other sensor probe is to act as a transmitter or a receiver; a role assignment that assigns the sensor probe to act as the transmitter or as the receiver; a synchronization signal to synchronize at least one of ultrasound transmission and reception or clocks between the at least one ultrasound transducer and the ultrasound transducer included in the other sensor probe; a synchronization acknowledgement signal; a request for data from the sensor probe; a response to the request for data from the sensor probe; a status report message indicating a status associated with the other sensor probe; or a ping announcement indicating the other sensor probe will generate ultrasound waves in the component during a particular time period.

A system comprising: a plurality of sensor probes, wherein a sensor probe, of the plurality of sensor probes, includes: at least one ultrasound transducer; and a controller configured to: receive, via the at least one ultrasound transducer, ultrasound signals from a component surface of a component; detect a pattern indicative of a communication from an other sensor probe, of the plurality of sensor probes, based on the received ultrasound signals; decode the received ultrasound signals to retrieve a message from the other sensor probe, in response to detecting the pattern indicative of the communication from the other sensor probe; and control the sensor probe to move the sensor probe to another location based at least in part upon the retrieved message.

The system of any preceding clause, wherein the sensor probe, of the plurality of sensor probes further includes: a locomotion actuator operable to move the sensor probe along the component surface of the component; wherein to control the sensor probe to move to another location, the controller is to activate the locomotion actuator.

The system of any preceding clause, wherein controllers of the plurality of sensor probes are configured to: perform a baseline surface mapping of the component at first locations of the plurality of sensor probes to obtain first ultrasound data; perturb the first locations of the plurality of sensor probes to second locations; obtain, at the second locations, second ultrasound data indicative of ultrasound waves in the component; determine target locations based on the first ultrasound data and the second ultrasound data; move the plurality of sensor probes to the target locations; and obtain, at the target locations, target location ultrasound data indicative of ultrasound waves in the component.

The system of any preceding clause, wherein the controllers are configured to: determine the target locations based on a Signal-to-noise (SNR) gradient between the first locations and the second locations.

The system of any preceding clause, wherein the controllers are configured to: determine new target locations based on computed SNR gradients, move the plurality of sensor probes to the new target locations, and obtain, at the new target locations, new target location ultrasound data indicative of ultrasound waves in the component, until a determination that SNR convergence has occurred, to arrive at final locations for an inspection.

The system of any preceding clause, wherein the controllers are configured to: synchronize ultrasound transmission and reception between particular ones of the plurality of sensor probes at the final locations to perform a full matrix capture inspection of the component.

The system of any preceding clause, wherein, when decoding the received ultrasound signals to retrieve the message from the other sensor probe, the controller is further configured to: receive a synchronization signal from the other sensor probe associated with the component; and synchronize ultrasound signal transmission or reception between the at least one ultrasound transducer and an ultrasound transducer included in the other sensor probe based on the received synchronization signal.

The system of any preceding clause, wherein, when synchronizing the ultrasound signal transmission or reception between the at least one ultrasound transducer and the ultrasound transducer included in the other sensor probe based on the received synchronization signal, the controller is further configured to: select transmitter and receiver roles for the at least one ultrasound transducer and the ultrasound transducer included in the other sensor probe.

The system of any preceding clause, wherein, when synchronizing the ultrasound signal transmission or reception between the at least one ultrasound transducer and the ultrasound transducer included in the other sensor probe based on the received synchronization signal, the controller is further configured to: synchronize ultrasound transmission and reception between the at least one ultrasound transducer and the ultrasound transducer included in the other sensor probe to cause the at least one ultrasound transducer and the ultrasound transducer included in the other sensor probe to function as an ultrasound phased array transceiver.

In the preceding specification, various preferred embodiments have been described with reference to the accompanying drawings. It will, however, be evident that various modifications and changes may be made hereto, and additional embodiments may be implemented, without departing from the broader scope of the invention as set forth in the claims that follow. The specification and drawings are accordingly to be regarded in an illustrative rather than restrictive sense.

It will be apparent that systems and/or methods, as described above, may be implemented in many different forms of software, firmware, and/or hardware in the implementations illustrated in the figures. The actual software code or specialized control hardware used to implement these systems and methods is not limiting of the embodiments. Thus, operation and behavior of the systems and methods were described without reference to the specific software code - it being understood that software and control hardware can be designed to implement the systems and methods based on the description herein. Further, certain portions, described above, may be implemented as a component that performs one or more functions. A component, as used herein, may include hardware, such as a processor, an ASIC, an FPGA, or a combination of hardware and software (e.g., a processor executing software).

## Claims

1. A sensor probe (110) comprising:
at least one ultrasound transducer (320); and
a controller (350) configured to:
receive, via the at least one ultrasound transducer (320), ultrasound signals (112, 114) from a component surface (125) of a component (120);
detect a pattern indicative of a communication from an other sensor probe (110), associated with the component (120), based on the received ultrasound signals (112, 114);
decode the received ultrasound signals (112, 114) to retrieve a message from the other sensor probe (110), in response to detecting the pattern indicative of the communication from the other sensor probe (110);
obtain, via the at least one ultrasound transducer (320), ultrasound data indicative of ultrasound waves (112, 114) in the component (120), in response to the retrieved message; and
cause data analysis for detecting defects in the component (120) to be performed based on the obtained ultrasound data.

2. The sensor probe (110) of claim 1, wherein, when decoding the received ultrasound signals (112, 114) to retrieve the message from the other sensor probe (110), the controller (350) is further configured to:
receive a synchronization signal from the other sensor probe (110) associated with the component (120); and
synchronize at least one of ultrasound signal transmission or reception or clocks between the at least one ultrasound transducer (320) and an ultrasound transducer (320) included in the other sensor probe (110) based on the received synchronization signal.

3. The sensor probe (110) of claim 2, wherein, when synchronizing the ultrasound signal transmission or reception between the at least one ultrasound transducer (320) and the ultrasound transducer (320) included in the other sensor probe (110) based on the received synchronization signal, the controller (350) is further configured to:
select transmitter and receiver roles for the at least one ultrasound transducer (320) and the ultrasound transducer (320) included in the other sensor probe (110).

4. The sensor probe (110) of either claim 2 or claim 3, wherein, when synchronizing the ultrasound signal transmission or reception between the at least one ultrasound transducer (320) and the ultrasound transducer (320) included in the other sensor probe (310) based on the received synchronization signal, the controller (350) is further configured to:
synchronize at least one of ultrasound transmission and reception or clocks between the at least one ultrasound transducer (320) and the ultrasound transducer (320) included in the other sensor probe (110) to cause the at least one ultrasound transducer (320) and the ultrasound transducer (320) included in the other sensor probe (110) to function as an ultrasound phased array transceiver.

5. The sensor probe (110) of any of claims 2 to 4, wherein, when synchronizing the ultrasound signal transmission or reception between the at least one ultrasound transducer (320) and the ultrasound transducer (320) included in the other sensor probe (110) based on the received synchronization signal, the controller (350) is further configured to:
synchronize at least one of ultrasound transmission and reception or clocks between the at least one ultrasound transducer (320) and the ultrasound transducer (320) included in the other sensor probe (110) to perform a full matrix capture inspection of the component (120).

6. The sensor probe (110) of any of claims 1 to 5, wherein the controller (350) is configured to:
change an angle of incidence of ultrasound signals (112, 114) transmitted by the at least one ultrasound transducer (320) into the component (120) based on the retrieved message.

7. The sensor probe (110) of any of claims 1 to 6, further comprising:
a locomotion actuator (420) operable to move the sensor probe (110) along the component surface (125);
wherein the controller (350) is further configured to control the locomotion actuator (420) to move the sensor probe (110) to another location based on the retrieved message.

8. The sensor probe (110) of claim 7, wherein, when controlling the locomotion actuator to move the sensor probe to another location based on the retrieved message, the controller is configured to:
receive ultrasound signals from the other sensor probe;
determine a Signal-to-noise (SNR) gradient based on the received ultrasound signals;
select a target location on the component surface based on the determined SNR gradient; and
control the locomotion actuator to move the sensor probe to the selected target location.

9. The sensor probe (110) of any of claims 1 to 8, wherein the controller (350) is configured to communicate with the other sensor probe (110) using ultrasound signals (112, 114) transmitted through the component (120) or along the component surface (125).

10. The sensor probe (110) of any of claims 1 to 9, wherein the controller (350) is further configured to:
perform message collision avoidance when communicating with the other sensor probe (110) using ultrasound signals (112, 114).

11. The sensor probe (110) of any of claims 1 to 10, wherein the retrieved message includes information identifying a message type, information identifying a sending sensor probe, information identifying a receiving sensor probe, and a message payload.

12. The sensor probe (110) of any of claims 1 to 11, wherein the retrieved message includes at least one of:
a role request that requests whether the other sensor probe (110) is to act as a transmitter or a receiver;
a role assignment that assigns the sensor probe (110) to act as the transmitter or as the receiver;
a synchronization signal to synchronize at least one of ultrasound transmission and reception or clocks between the at least one ultrasound transducer (320) and the ultrasound transducer (320) included in the other sensor probe (110);
a synchronization acknowledgement signal;
a request for data from the sensor probe (110);
a response to the request for data from the sensor probe (110);
a status report message indicating a status associated with the other sensor probe (110); or
a ping announcement indicating the other sensor probe (110) will generate ultrasound waves (112, 114) in the component (120) during a particular time period.

13. A method, performed by a sensor probe (110), the method comprising:
receiving, via an ultrasound transducer (320) in the sensor probe (110), ultrasound signals (112, 114) from a component surface of a component (120);
detecting a pattern indicative of a communication from another sensor probe (110), associated with the component (120), based on the received ultrasound signals (112, 114);
decoding the received ultrasound signals (112, 114) to retrieve a message from the other sensor probe (110), in response to detecting the pattern indicative of the communication from the other sensor probe (110);
obtaining, via the ultrasound transducer (320), ultrasound data indicative of reflected or induced ultrasound waves in the component (120), in response to the retrieved message; and
performing data analysis for detecting defects in the component based on the obtained ultrasound data.

14. The method of claim 13, further comprising:
performing a baseline surface mapping of the component at first locations of a plurality of sensor probes (110) to obtain first ultrasound data;
perturbing the first positions of the plurality of sensor probes (110) to second locations;
obtaining, at the second locations, second ultrasound data indicative of ultrasound waves in the component (120);
determining target locations based on the first ultrasound data and the second ultrasound data based on a Signal-to-noise (SNR) gradient between the first locations and the second locations;
moving the plurality of sensor probes (110) to the target locations;
obtaining, at the target locations, target location ultrasound data indicative of ultrasound waves in the component (120);
determining new target locations based on computed SNR gradients, move the plurality of sensor probes (110) to the new target locations, and obtain, at the new target locations, new target location ultrasound data indicative of ultrasound waves in the component (120), until a determination that SNR convergence has occurred, to arrive at final locations for an inspection; and
synchronizing ultrasound transmission and reception between particular ones of the plurality of sensor probes (110) at the final locations to perform a full matrix capture inspection of the component (120).
